# EUROPÄISCHE PATENTANMELDUNG

(11) **EP 4 350 944 A1**
(43) Veröffentlichungstag der Anmeldung: **10.04.2024**
(21) Anmeldenummer: 23189811.5
(22) Anmeldetag: 04.08.2023
(51) Int. Cl.: H02J 13/00, H04L 12/10, H02J 4/00

(54) **VERFAHREN ZUR ÜBERWACHUNG UND ERKENNUNG DER ELEKTRISCHEN TOPOLOGIE EINES VERSORGUNGSNETZES**

(30) Priorität: 06.09.2022 DE 102022122617
(71) Anmelder: Turck Holding GmbH, 58553 Halver (DE)
(72) Erfinder: MANTEI, Dirk, 32760 Detmold (DE); BECKER, Friedrich, 32657 Lemgo (DE)
(74) Vertreter: DTS Patent- und Rechtsanwälte Schnekenbühl und Partner mbB

(57) **Zusammenfassung**

Die vorliegende Erfindung betrifft ein Verfahren zur Erfassung der elektrischen Topologie eines Versorgungsnetzes, umfassend mindestens ein Netzteil, eine Steuereinheit, mindestens ein Feldbusgerät und mindestens eine Messeinrichtung, wobei die Feldbusgeräte vom Netzteil als Versorgungsquelle (Spannung- und Stromquelle) versorgt werden, die mindestens eine Messeinrichtung ein Smart-Connector, ein Feldbusgerät und/oder ein im Netzteil integrierter oder hiermit verbundener Betriebswertesensor ist
und wobei mindestens ein Verbraucher umfasst ist, der ein Feldbusgerät und/oder ein sonstiges bestromtes Gerät ist. Hierbei werden die folgende Schritte durchlaufen : a) Ansteuerung mindestens eines Verbrauchers zur Erzeugung eines Betriebssignals (Betriebssignal), b) Erfassung des Betriebssignals und/oder des zeitlichen Verlaufes des Betriebssignals durch die mind. eine Messeinrichtung, c) Erfassung des zum Betriebssignal analogen Betriebswertes (Betriebsparameter), d) Auswertung der Erfassungsdaten aus Betriebssignal und Betriebsparameter und e) Anwendung eines Algorithmus' zur Bestimmung der Topologie des Versorgungsnetzes. Weiterhin ist von der Erfindung ein Versorgungsnetz umfasst, das eingerichtet ist, dieses Verfahren durchzuführen.

## Beschreibung

Die vorliegende Erfindung betrifft ein Verfahren zur Überwachung und Erkennung der elektrischen Topologie eines Versorgungsnetzes nach dem Oberbegriff des Anspruchs 1 und ein Versorgungsnetz zur Durchführung eines solchen Verfahrens nach dem Oberbegriff des Anspruchs 14.

Im Stand der Technik ist es bekannt, Betriebswerte im oder direkt am Verbraucher zu erfassen. So zeigt beispielsweise die DE 10 2020 121 752 A1 einen elektrischen Steckverbinder mit einem Gehäuse mit einer elektrischen Schaltung, die innerhalb des Gehäuses angeordnet ist. Dabei weist die elektrische Schaltung eine Sensoreinrichtung, eine Steuereinrichtung und eine Kommunikationsschnittstelle auf, wobei die Sensoreinrichtung dazu eingerichtet ist, einen elektrischen Betriebsparameter zu erfassen und die Steuereinrichtung dazu eingerichtet ist, anhand des elektrischen Betriebsparameters Ausgabedaten zu erzeugen und mittels einer Kommunikationsschnittstelle auszugeben. Hierbei kann die elektrische Schaltung gemäß dieser Druckschrift eine Stromversorgungsschaltung, eine Sensorschaltung, einen Mikroprozessor und ein Telekommunikationsmodul umfassen.

Auch wenn diese Erfassung von Betriebswerten grundsätzlich befriedigend möglich ist, besteht insbesondere bei alten, gewachsenen Versorgungsnetzen ein großer Bedarf, die gesamte Topologie auf einfache Art und Weise zu erfassen.

Hierzu schlägt die EP 2 748 90 7 B1 ein Verfahren vor, wobei an Netzanschlußpunkten eine Reihe von synchronisierten Strom- und Spannungsmessungen erfolgen und die gemessenen Daten in zwei Messmatrizen zur Spannung und zu den Stromwerten zusammengefasst werden. In einem nachfolgenden Schritt wird vorgeschlagen, aus den Werten der Messmatrizen ein überbestimmtes Gleichungssystem aufzustellen, das unter Zuhilfenahme bekannter Verfahren zur Näherungslösung für überbestimmte Gleichungssysteme eine Beitragsmatrix Z ermittelt, welche die Kenngrößen des Energieversorgungsnetzes umfasst. Hierbei soll insbesondere die Beitragsmatrix Z unter Zuhilfenahme der Moore-Penrose- Pseudo-Inversen I+ und/oder für radiale Netze aus der Beitragsmatrix Z durch Maximumbetrachtungen sogenannte leaf nodes, also Endnetzanschlußpunkte ermittelt werden und/oder für radiale Netze aus der Beitragsmatrix Z durch einen Vergleich der Spannungspegel von Netzanschlußpunkte, die Struktur des Netzes ermittelt werden.

Diese vorgenannten Lösungen sind für Versorgungsnetze zum einen sehr aufwändig und bieten keine hinreichende Sicherheit auf die real vorliegende Strom- und Spannungstopologie, insbesondere nicht für ein Versorgungsnetz industrieller Behandlungs- und/oder Automatisierungsanlagen.

Es ist die Aufgabe der vorliegenden Erfindung, ein verbessertes Verfahren für die automatisierte Erfassung einer Topologie vorzuschlagen.

Diese Aufgabe wird erfindungsgemäß gelöst durch ein Verfahren nach den Merkmalen des Anspruchs 1 und einem Versorgungsnetz nach den Merkmalen des Anspruches 14. Vorteilhafte Ausgestaltungen sind in den jeweiligen, zugehörigen Unteransprüchen angegeben.

Danach wird die Aufgabe gelöst durch ein Verfahren zur Erfassung der elektrischen Topologie eines Versorgungsnetzes, umfassend mindestens ein Netzteil, eine Steuereinheit, mindestens ein Feldbusgerät und mindestens eine Messeinrichtung, wobei das Feldbusgerät vom Netzteil als Versorgungsquelle, insbesondere als Spannungs- und/oder Stromquelle, versorgt wird, - die mindestens eine Messeinrichtung ein Smart-Connector, ein Feldbusgerät und/oder ein im Netzteil integrierter oder hiermit verbundener Betriebswertesensor ist und wobei mindestens ein Verbraucher umfasst ist, der ein Feldbusgerät und/oder ein sonstiges bestromtes Gerät ist.

Hierbei werden die folgenden Schritte durchlaufen:
a) Ansteuerung mindestens eines Verbrauchers zur Erzeugung eines Betriebssignals,
b) Erfassung des Betriebssignals und/oder des zeitlichen Verlaufes des Betriebssignals durch die mind. eine Messeinrichtung,
c) Erfassung des zum Betriebssignal analogen Betriebswertes,
d) Auswertung der Erfassungsdaten aus Betriebssignal und Betriebswert,
e) Anwendung eines Algorithmus' zur Bestimmung der Topologie des Versorgungsnetzes

Der vorgenannte Betriebswertesensor ist ausgebildet, mindestens einen der folgenden Messwerte zu erfassen: Stromwert, Spannung, Impedanz, Magn. Feldstärke und/oder einen sonstigen strom- u/o spannungsrelevanten Messwert mindestens eines Versorgungsnetzteilnehmers oder mindestens eines Versorgungsnetzabschnitts.

Bevorzugter Weise erfolgt der Datenaustausch mit einem Smart-Connector oder einem Feldbusgerät über bestehende Datenleitungen, insbesondere das industrielle (Daten-)Netzwerk zur Ansteuerung beispielsweise der zugehörigen Behandlungsanlage und -maschinen. Das Netzwerk ist insbesondere mindestens teilweise ein Ethernet. Ein Vorteil kann weiterhin darin bestehen, wenn das verwendete Protokoll beispielsweise ein Profinet, Modbus TCP, Ethernet/IP, EtherCat, Profibus, CC-Link, IO-Link oder SPE ggf. mit PoDL ist.

Hierbei kann es vorteilhaft sein, wenn der Datenaustausch (Kommunikation) mit Hilfe beispielsweise einer bestehenden SPS/PLC-Steuerung der zugehörigen Behandlungsanlage und/oder einer Behandlungsmaschine erfolgt. Somit kommuniziert (senden, empfangen und/oder leiten weiter) die SPS/PLC-Steuerung der zugehörigen Behandlungsanlage und/oder einer Behandlungsmaschine als Steuereinheit die für das Verfahren zur Erfassung der elektrischen Topologie eines Versorgungsnetzes nötigen Befehle und Daten zu der (zentralen) Steuereinheit.

Eine Verbesserung kann darin bestehen, dass die für das Verfahren zur Erfassung der elektrischen Topologie des Versorgungsnetzes nötige Kommunikation auch unabhängig von der zugehörigen Behandlungsanlage und/oder einer Behandlungsmaschine von einer separaten Steuereinheit erfolgt, sodass die Kommunikation der zugehörigen Behandlungsanlage und/oder einer zugehörigen Behandlungsmaschine nicht beeinflusst und/oder geändert werden muss. Somit ist beispielsweise kein Eingriff in das Programm zur Steuerung der eigentlichen Produktion bzw. der Behandlungsanlage und/oder einer der Behandlungsmaschinen nötig.

Weiterhin kann ein Vorteil darin bestehen, dass die Kommunikation mit einem Smart-Connector oder einem Feldbusgerät zur Durchführung des Verfahrens zur Erfassung der elektrischen Topologie des Versorgungsnetzes durch ein oder mehrere weitere gesonderte Geräte erfolgen, die mit der zentralen Steuerung kommunizieren, wie vorstehend beschrieben.

Hierbei kann eine Verbesserung darin bestehen, wenn die Kommunikation mit einem Smart-Connector durch ein oder mehrere weitere gesonderte Geräte erfolgen, die drahtlos bspw. über WiFi, Funk oder Bluetooth kommunizieren. Vorteilhafterweise kommunizieren diese weiteren Geräte mit der vorgenannten (zentralen) Steuerung. Diese Ausführungsform ist besonders vorteilhaft, wenn in einer Behandlungsanlage große Abstände oder sonstige ungünstige räumliche oder bauliche Gegebenheiten vorliegen. Weiterhin kann es vorteilhaft sein, mehrere solcher weiteren Geräte vorzusehen, die die Kommunikation zu den Smart-Connectors und/oder den Feldgeräten sicherstellen.

Unter einem "Smart-Connector" oder einer "Smart-Connector-Einheit" ist vorliegend ein elektronisches Bauteil zu verstehen, das als Sensorelement zur Erfassung von Messwerten der strom- und spannungsversorgenden Leitungen ausgebildet ist und auf diese Weise Erfassungsdaten, wie beispielsweise Stromwerte, Spannung, Temperatur und/oder sonstige relevante Betriebs- und Leistungsdaten einer Leitung erfassen und an eine Steuereinheit weiterleiten kann. Vorteilhafterweise weist ein Smart-Connector einen Mikroprozessor auf, mit welchem Erfassungsdaten ausgewertet und bearbeitet werden können, wobei bedarfsweise geeignete Speichermedien vorgesehen werden können. Ein Smart-Connector kann bei einer Ausführungsform ein Schaltelement umfassen, mit welchem die überwachte Leitung geschaltet werden kann.

Hierbei steht die genaue Lage der Versorgungsnetzkomponenten nicht vorrangig im Fokus des Verfahrens, das heißt, deren räumliche Lage und Abmessung zueinander am Aufstellungsort oder die Länge von Leitungen (Kabel) wird nicht ermittelt, sofern diese nicht als konstante Versorgungsnetzeigenschaft beachtet werden kann, wie die Kapazität oder die Induktivität einer Leitung oder Leitungsverbindung.

Auch wenn nachfolgende Messeinrichtung hinsichtlich Eigenschaften und Funktionen insbesondere anhand von Smart-Connectors als Messeinrichtung erklärt werden, soll dies nicht einschränkend verstanden werden und in identischer oder analoger Weise auch ein Feldbusgerät oder das Netzteil mit Betriebswertesensor verstanden werden, wenn nicht ausdrücklich etwas anderes ausgeführt wird und/oder es technisch, physikalisch nicht sinnvoll u/o unmöglich ist. Bspw. wird man in der Regel nicht mehrere Netzteile vorsehen, sondern mit einem Netzteil eine Mehrzahl von Smart-Connectors u/o Feldbusgeräten versorgen und nicht umgekehrt. Weiterhin wird man ein bestehendes Versorgungsnetz vorrangig durch eine Mehrzahl von wirtschaftlich vorteilhaften Smart-Connectors ergänzen, und nicht vorrangig eine Vielzahl von Feldbusgeräten austauschen, um das Versorgungsnetz für das erfindungsgemäße Verfahren zu ertüchtigen.

Unter dem "Betriebssignal" ist vorliegend eine veranlasste Änderung eines Betriebsparameters eines Verbrauchers zu verstehen, das zum Zwecke der Erfassung und Ermittlung der Topologie definiert gesteuert wird. In analoger Weise meint vorliegend "Betriebsparameter" denjenigen in der Steuereinheit und/oder dem Verbraucher hinterlegten, steuerbaren Parameter, der zu dem erfassbaren "Betriebssignal" führt. Beispielsweise ist das Betriebssignal ein definierter Leistungsanstieg und der zugehörige "Betriebsparameter" ist die Verdopplung der Umdrehungszahl des Motors (Verbrauchers). In analoger Weise meint "Betriebswert" die jeweilige zum "Betriebssignal" analoge physikalische oder elektrische Größe, erfasst oder erfassbar weitgehend außerhalb der Dauer des Betriebssignales.

Unter "Erfassung" von Betriebssignal soll vorliegend immer auch eine mindestens zeitweise Speicherung von erfassten Daten in der Messeinrichtung und/oder einer verbundenen Steuereinheit verstanden werden.

Die vorstehend genannten "Feldbusgeräte" können insbesondere Sensoren, Aktoren oder I/O Module sein. Weiterhin können unter Feldgeräten auch ein Human Machine Interface (HMI), eine Speicherprogrammierbare Steuerung (SPS) oder ein Programmable Logic Controller (PLC) verstanden werden.

Bei einer alternativen Ausführungsform kann der Schritt c), Erfassung des zum Betriebssignal analogen Betriebswertes, vor oder nach dem Schritt a) erfolgen, insbesondere zeitlich unmittelbar vor den Schritten a) oder b). Auf diese Weise wird der Null-Zustand oder Ausgangszustand des Versorgungsnetzes erfasst. Alternativ kann es vorteilhaft sein, wenn der Schritt c) vor dem Schritt a) und nach dem Schritt b) erfolgt, insbesondere bei Versorgungsnetzabschnitten, die viele in Reihe geschaltete Versorgungsnetzteilnehmer aufweisen oder bei der Durchführung des Verfahrens, wenn viele die Betriebssignale beeinflussende Störgrößen vorliegen

Hierbei kann es insbesondere vorteilhaft sein, wenn im Falle, dass der Schritt c) nach dem Schritt b), Erfassung des Betriebssignals und/oder der zeitlichen Verlaufes des Betriebssignals durch die mindestens eine Messeinrichtung, erfolgt, das Ende (Abklingen) des Betriebssignales abgewartet wird, insbesondere das vollständige Ende (Abklingen) des Betriebsparameters abgewartet wird.

Insofern ist es vorteilhaft, den Schritt c), Erfassung des zum Betriebssignal analogen Betriebswertes, vor und nach dem Schritt b) vorzunehmen. Durch die vorlaufende Erfassung des zum Betriebssignal analogen Betriebswertes ist dieser der Höhe, Größe oder der Charakteristik nach bekannt und beim Erreichen derselben Höhe, Größe und/oder Charakteristik dieses vorherigen Betriebswertes, kann die Erfassung des Betriebssignales oder des Verlaufens des Betriebssignals als abgeschlossen angesehen und beendet werden.

Bei einer Variante des Verfahren werden die Schritte d) und d) zeitlich versetzt durchlaufen, insb. können die Schritte a) bis c) mehrfach durchlaufen werden und die Schritte d) und e) werden für eine Mehrzahl von einer der vorgenannten Schrittfolgen der Schritte a), b) und/oder c) vorgenommen.

Unter "Erfassungsdaten" sollen alle Messwerte und Daten verstanden werden, die von einer Messeinheit, wie bspw. auch einem Smart-Connector, über eine oder von einer Leitung erfasst werden. Weiterhin wird durchgehend von "Erfassungsdaten" gesprochen, auch wenn diese ggf. konvergiert, digitalisiert, komprimiert oder in sonstiger Weise aufbereitet werden, ausgehend von dem erstmalig ermittelten Messwert. Somit soll unter "Erfassungsdaten" auch jede Form oder Anteil der Aufbereitung der Daten verstanden werden, die von einer Messeinrichtung innerhalb oder zu einem Smart-Connector gesendet oder durchgeleitet werden. Die Messeinrichtung kann vorliegend als einfacher Strom- oder Spannungssensor ausgebildet sein, der die Erfassungsdaten an eine angeschlossene Steuereinheit weiterleitet. Vorteilhafterweise umfasst die Messeinrichtung, bspw. einen Smart-Connector, einen Mikroprozessor, so dass Erfassungsdaten mindestens teilweise ausgewertet und bedarfsweise gespeichert werden können bzw. nur bedarfsweise und ggf. auf Anfrage an die Steuereinheit in dem erforderlichen Umfang übermittelt werden.

Hierbei kann grundsätzlich die Datenaufbereitung der Erfassungsdaten irgendwo im Versorgungsnetz, insbesondere irgendwo im Smart-Connector erfolgen. Auf diese Weise kann auch ein bestehendes Versorgungsnetz über die Einbindung einer Mehrzahl von Smart-Connectors mit einer eigenen Erfassungsfunktion für die Topologie ausgerüstet und betrieben werden.

Weiterhin ist Steuereinheit nicht einschränkend zu verstehen und kann mehrteilig aus zwei oder mehr Untereinheiten gebildet sein oder mindestens eine Untereinheit umfassen, die datenleitend miteinander zusammenarbeiten. Insbesondere kann die Steuereinheit als Untereinheit eine Auswerteeinheit aufweisen oder mit einer Auswerteeinheit verbunden sein, in der weitgehend unabhängig von eigentlichen Betrieb und der eigentlichen Steuerung des Netzwerkes, des Versorgungsnetzes und/oder einer verbundenen Behandlungs- und/oder Automatisierungsanlage, die Auswertung der Erfassungsdaten erfolgt, und wobei bedarfsweise der Steuerung, Ergebnisse der Auswertung zur Verfügung gestellt werden können.

Vorliegend meint "Betriebsdaten" solche Daten, die zwischen einer Steuereinheit, einem Master zu bzw. mit einem Device (Feldbusgerät und/oder Verbraucher) auch in Abwesenheit und insbesondere ohne ergänzende Erfassungsdaten ausgetauscht werden.

Hierbei meint vorliegend "Topologie" die Anordnung und Reihenfolge der Verbraucher, insbesondere der Feldbusgeräte und der Smart-Connectors im Stromversorgungsnetz, also eine Strom- oder Spannungstopologie. Die Topologie wird, wie insbesondere in den Figuren auch gezeigt, im Wesentlichen als Graph mit einem Netzteil als Versorgungsquelle, mehreren Versorgungsnetzkomponenten, wie Feldbusgerät und Smart-Connectors, die Versorgungsquelle und die Versorgungsnetzkomponenten verbindende Leitungen und Leitungsknoten gebildet bzw. dargestellt.

In einer Behandlungsanlage oder bei einer Behandlungsmaschine können mehrere unabhängige Versorgungsnetze mit einem Netzteil oder mit mehreren Netzteilen bestehen. Das Verfahren zur Erfassung der elektrischen Topologie eines Versorgungsnetzes ist auch dann anwendbar, wenn das gesamte Versorgungsnetz oder Teile (Zweige) des Versorgungsnetzes durch zwei oder mehr Netzteile versorgt werden.

Bei einer verbesserten Verfahrensvariante kann es vorteilhaft sein, wenn im Auswertungsschritt d) unmittelbar und/oder nachlaufend die aus den Betriebssignal und/oder Betriebswert ermittelten Erfassungsdaten strukturiert werden, wie beispielsweise der Hinzufügung einer ID und/oder eines Zeitstempels, und wobei die Erfassungsdaten nach der Strukturierung an die Steuereinheit und/oder eine andere zentrale Auswerte- und/oder Speichereinheit gesendet werden.

Bei einer weiter verbesserten Verfahrensvariante kann es vorteilhaft sein, wenn im Schritt b) die Erfassung des zeitlichen Verlaufes des Betriebssignals durch die mind. eine Messeinrichtung erfolgt, wobei diese Erfassung des zeitlichen Verlaufs in Abhängigkeit von den folgenden Charakteristika des Betriebssignal erfolgt, wenn:
a) als Betriebssignal ein einmaliger, sprunghafter Anstieg des Betriebsparameters vorgenommen wird, insbesondere mit einer kurzen "rise-time" des Stroms und/oder der Spannung und/oder
b) als Betriebssignal eine hochfrequente, periodische Änderung des Stroms und/oder der Spannung vorgenommen wird.

Bei einer weiter verbesserten Verfahrensvariante kann es vorteilhaft sein, wenn nach einer definierten Reihenfolge, Priorisierung und/oder nach einem Zufallsprinzip die Verbraucher, insbesondere alle Verbraucher, des Versorgungsnetzes gem. Schritt a) zur Erzeugung eines Betriebssignals (Betriebssignal) angesteuert werden.

Bei einer weiter verbesserten Verfahrensvariante kann es vorteilhaft sein, wenn im Schritt a) zwei oder mehr Verbraucher derart angesteuert werden, dass diese gleichzeitig ein Betriebssignal ins Versorgungsnetz senden.

Vorteilhafterweise erfolgt im Schritt b) eine Erfassung des zeitlichen Verlaufes des Betriebssignal durch die mindestens eine Messeinrichtung.

Bei einer weiteren Verfahrensvarianten kann eine Verbesserung darin bestehen, dass mindestens zeitweise parallel zu mindestens einem der Schritte a) und/oder b) ein Abgrenzungsschritt erfolgt. Dieser Abgrenzungsschritt kann darin bestehen, dass von mindestens einem Smart-Connector und/oder einem weiteren Verbraucher, insbesondere einem Feldbusgerät, ein Gegensignal (Gegensignal) ins Versorgungsnetz gesendet wird, so dass unterscheidbar wird, welche Messeinrichtungen sich vor oder nach dem das Betriebssignal sendenden Verbraucher und/oder dem das Gegensignal sendenden Verbraucher befindet.

Der Abgrenzungsschritt erfolgt vorteilhafterweise mindestens zeitweise parallel zum Schritt b), dem Erfassungsschritt. Das Gegensignal ist insbesondere eine Abschwächung und/oder eine Blockade der Effekte eines veranlassten Betriebssignals in anderen Abschnitten des Versorgungsnetzes. Ein Gegensignal ist nicht einschränkend zu verstehen und meint neben zusätzlichen elektrischen oder physikalischen Signalen auch sonstige Steuerungen und Aktionen für einen Verbraucher oder eine Messeinrichtung, um diese gegen den zu erfassenden Verbraucher oder Netzabschnitt abzugrenzen. Dies kann beispielsweise neben den nachstehend genannten Arten von Gegensignalen auch in einer temporären Abschaltung oder Schaltung einer Umleitung (Bypass-Leitung) zu bspw. einem Verbraucher bestehen, um konkurrierende Kapazitäten und/oder Induktivitäten zeitweise auszuschließen.

Bei einer weiter verbesserten Verfahrensvariante kann es vorteilhaft sein, wenn bei der vorgenannten Verfahrensvariante der Abgrenzungsschritt und die Veranlassung eines Gegensignals mind. zeitweise parallel zu einem der Schritt a) und/oder b) erfolgt, wobei das Gegensignal in Abhängigkeit von der Charakteristika des Betriebssignals ausgebildet ist und/oder veranlasst wird, und wobei das Gegensignal darin besteht, dass mindestens für eine Zeitdauer parallel zum Betriebssignal in mindestens einem Verbraucher, insb. einem Feldbusgerät, als Gegensignal mindestens eine zusätzliche Induktivität und/oder Kapazitäten parallel und/oder seriell hinzugeschaltet werden.

Als besonders vorteilhaft hat sich erwiesen, wenn mindestens ein Gegensignal als zusätzliche Induktivität und/oder Kapazitäten zugeschaltet wird, wobei dieses Gegensignal
a) den zeitlichen Verlauf (rise/fall-time) der Strom-/Spannungsänderung in Teilen des Spannungsversorgungsnetzes verändert, wenn das Betriebssignal in einem einmaligen, sprunghaften Anstieg (kurze rise-time) eines Betriebsparameters besteht oder
b) ein hochfrequentes Betriebssignal herausfiltert und/oder blockiert, insbesondere wenn das Betriebssignal eine hochfrequente und/oder eine periodische Änderung eines elektrischen Betriebsparameters ist.

Der Betriebsparameter ist hierbei insbesondere der Stromfluss, die Stromstärke, die Spannung und/oder die magn. Feldstärke.

Auf diese Weise wird mindestens eine Teil der Topologie unterscheidbar, insbesondere wird unterscheidbar, welche Messeinrichtungen sich vor oder nach dem das Betriebssignal und/oder dem das Gegensignal sendenden Verbraucher befindet.

Bei einer alternativen Ausführungsform des Verfahrens kann vorgesehen werden, dass das Hinzuschalten zusätzlicher Induktivitäten und/oder Kapazitäten zumindest in Teilen des Versorgungsnetzes unterbleiben kann, wenn die Kapazität und/oder Induktivität dieses Teils des Versorgungsnetzes bekannt sind und in der Steuerung als Versorgungsnetzdaten bekannt sind. Solche Versorgungsnetzdaten (Induktivitäten und/oder Kapazitäten) können beispielsweise herstellerseitig oder als Labordaten ermittelt werden, wenn ein Verbraucher oder eine Messeinrichtung, wie ein Smart-Connector, in Verbindung mit einem Anschlusskabel hergestellt und ausgeliefert wurde und bspw. im Smart-Connector Versorgungsnetzdaten über den Smart-Connector und/oder das Anschlusskabel hinterlegt sind. Auf diese Weise können die Einflüsse von sonstigen Versorgungsnetzbedingten Induktivitäten und/oder Kapazitäten rechnerisch von erfassten Betriebssignalen unterschieden werden.

Bei einer weiter verbesserten Verfahrensvariante kann es vorteilhaft sein, wenn das im Schritt a) von mindestens einem Verbraucher ins Versorgungsnetz gesendet Betriebssignal Folgendes ist:
- ein für eine Zeitdauer definierter, längerer Stromfluss durch eine Leerleistung,
- ein für eine Zeitdauer definierter, längerer Stromfluss durch eine Betriebsleistung,
- eine Modulation der Stromaufnahme eines Verbrauchers nach einem definierten Gradienten und/oder Takt,

Das Versorgungsnetz ist üblicherweise ein Steuer-, Regelungs- und Versorgungsnetz für eine Behandlungs- und/oder Automatisierungsanlage und es werden in der Regel keine Aktionen veranlasst, die für die Überwachung und/oder den Betrieb der verbundenen Behandlungs- und/oder Automatisierungsanlagen und/oder das Versorgungsnetz selbst erforderlich sind, insbesondere unmittelbar erforderlich sind. In Abgrenzung hierzu meint "Leerleistung" eine Aktion, die weitgehend oder vollständig ohne Relevanz für den bestimmungsgemäßen Betrieb des Versorgungsnetzes und/oder der verbundenen Behandlungs- und/oder Automatisierungsanlage ist. Solch eine Leerleistung kann bspw. darin bestehen, dass eine Einschaltung einer Beleuchtung mit einem definierten Takt oder für eine definierte Zeitdauer erfolgt, von bspw.. allen LED oder einzelnen LED eines Feldbusgerätes, eine zusätzliche Auslastung eines Prozessors mit rechenintensiven Operationen veranlasst wird.

Unter einer "Betriebsleistung" soll vorliegend verstanden werden, dass ein in einem der Schritten a) bis b) der Betriebsparameter eines aktiven Verbrauchers, für eine definierte Zeitdauer definiert angehoben, gestoppt und/oder gesenkt wird. Hierbei ist auch die Nutzung einer bekannten Strom-Signatur für eine definierte Zeitdauer eines Verbrauchers zu verstehen, insbesondere eines Feldbusgerätes, wie eines Sensors oder Aktors. Die Ansteuerung erfolgt insbesondere auf Basis der Ansteuerung durch eine Steuerung (SPS/PLC). Eine solche Signatur könnte bspw. darin bestehen, dass alle 10 Sekunden ein Motor für 3 Sekunden eingeschaltet wird oder für jeweils 3 Sekunden in seiner Drehzahl um einen definierten Wert beschleunigt oder verlangsamt wird.

Ein Betriebssignal, das in der Änderung einer Betriebsleitung besteht, wird notwendigerweise nur in einer von der SPS/PLC/Steuerung definierten zulässigen Zeitspanne, Größe und/oder Häufigkeit erfolgen.

Ganz allgemein ist es vorteilhaft, wenn Leerleistungen oder Betriebsleistungen als Modulation über einen definierten Zeitraum erfolgen, wie beispielsweise eine eher langsame Modulation, wie eine Art Morsesignal, durch eine Muster aus Ein- und Ausschaltungen. Alternativ kann eine definierte Anstiegszeit des Betriebssignals veranlasst werden, in der Regel eine sehr kurze Anstiegszeit (rise-time), wobei der Gradient bekannt ist bzw. von der Steuerung vorgegeben wird. Zusätzlich oder alternativ kann ein hochfrequentes Betriebssignal veranlasst werden, sodass ein Blockieren oder Abschwächen durch zusätzliche oder bekannte Induktivitäten sowie andere elektronische Bauelemente oder Schaltungen möglich ist

Diese Modulationen lassen sich besonders gut gegenüber den sonstigen Betriebsparametern des Versorgungsnetzes abgrenzen und sind daher schnell hinsichtlich des Verbrauchers, der das Betriebssignal gesendet hat und seine Lage relativ zur erfassenden Messeinrichtung bestimmbar.

Bei einer verbesserten Ausführungsform kann vorgesehen sein, dass zur Modulation und/oder Schaltung ein Schaltelement in dem Smart Connector vorgesehen ist, worüber die Modulation und/oder Schaltung mindestens eines Netzabschnitts erfolgen kann. Damit kann auch eine zusätzliche Sicherungsfunktionalität erreicht werden. Insbesondere können hierdurch passive Verbraucher, welcher hinter dem Smart-Connector angeschlossen sind, ein-/ausgeschaltet werden.

Bei einer weiter verbesserten Verfahrensvariante kann es vorteilhaft sein, wenn zwischen den Schritten a) bis c) in mindestens dem Abschnitt oder dem Zweig des Versorgungsnetzes, in welchem der mindestens eine das Betriebssignal sendende Verbrauer und/oder die das Betriebssignal erfassende Messeinrichtung eingebunden sind
- keine Änderung der sonstigen Stromaufnahme erfolgt oder
- der Betrag der Änderung der sonstigen Stromaufnahme hinsichtlich Betrag und/oder Frequenz wesentlich kleiner oder größer ist als der Betrag und/oder Frequenz des Betriebssignal.

Üblicherweise ist es nicht erforderlich, dass im bestimmungsgemäßen Betrieb eines Versorgungsnetzes oder einer zugehörigen Behandlungs- und/oder Automatisierungsanlage die Topologie ständig erfasst und neu gespeichert wird.

Somit ist es vorteilhaft, wenn die Erfassung bei möglichst geringen Störeinflüssen und potenzielle Fehlerquellen erfolgt. Es ist somit sinnvoll die Erfassung in Ruhe- oder Pausenzeiten des Versorgungsnetzes vorzunehmen, wie bspw. in der Nacht oder außerhalb von normalen Betriebszeiten des Versorgungsnetzes oder der zugehörigen Behandlungs- und/oder Automatisierungsanlage.

Idealerweise bezieht die zentrale Steuerung die erforderlichen Daten von der SPS/PLC der Behandlungs- und/oder Automatisierungsanlage und wählt für die Durchführung der Erfassung nach den Verfahrensschritten a) bis c), insbesondere im Schritt b) bis c), einen zeitlichen Rahmen, an dem keine Änderung des Stromflusses durch die Ansteuerung des Verbrauchers, insb. des Feldbusgerätes, durch die SPS/PLC zu erwarten ist.

Bei einer weiter verbesserten Verfahrensvariante kann es vorteilhaft sein, wenn zwischen den Schritten a) bis c) in mindestens dem Abschnitt oder dem Zweig des Versorgungsnetzes, in welchem der mindestens eine das Betriebssignal sendende Verbraucher und/oder die das Betriebssignal erfassende Messeinrichtung eingebunden sind eine für das Betriebssignal relevante Änderung der sonstigen Stromaufnahme erfolgt, wobei für denselben Verbraucher und/oder Messeinrichtung eine vielfache Wiederholung der Schritte a) bis c) erfolgt und über statistische Verfahren die relevanten Änderung der sonstigen Stromaufnahmen identifizierbar und filterbar sind.

Bei einer weiter verbesserten Verfahrensvariante kann es vorteilhaft sein, wenn in den Schritten d) der Auswertung der Erfassungsdaten und/oder e) der Anwendung eines Algorithmus' zur Bestimmung der Topologie des Versorgungsnetzes, neben den Erfassungsdaten durch die Steuereinheit Sekundärdaten ausgewertet werden, wobei die Sekundärdaten beispielsweise mindestens eine der folgenden Daten betreffen:
- Informationen zur Topologie von mindestens einem Zweig oder einem Abschnitt des Versorgungsnetzes,
- Information zu mindestens einem Verbraucher, insbesondere mindestens einem nicht oder mehrdeutig identifizierten Zweig oder Abschnitt des Versorgungsnetzes und/oder einem nicht oder mehrdeutig identifizierten Verbraucher.

Insgesamt ist es hierbei vorteilhaft, wenn die zu den Betriebssignal zugehörigen Betriebswerte außerhalb einer Erfassung eines Betriebssignals während der Schritte a) bis c) regelmäßig im Versorgungsnetz mindestens teilweise, insbesondere vollständig gemessen, ausgewertet und gespeichert werden. Ebenso kann es vorteilhaft sein, wenn Sekundärdaten in mindestens einem Versorgungsnetzabschnitt parallel oder außerhalb einer Erfassung eines Betriebssignals während der Schritte a) bis c) mindestens teilweise, insbesondere vollständig gemessen, ausgewertet und gespeichert werden.

Insbesondere ist es vorteilhaft, wenn die Steuereinheit und/oder eine separate Auswerteeinheit vorgesehen ist, die zur Auswertung der Betriebswerte, der Betriebsparameter und/oder der Sekundärdaten derart ausgebildet ist und mindestens eine entsprechende Software umfasst und/oder anwendet, die auf Prozessen des Maschinenlernens (ML), eines Fuzzy-Netzwerkes und/oder einer künstlichen Intelligenz (KI) arbeitet. Vorteilhafterweise werden weitere Betriebswerte und/oder sonstige Messwerte/-daten gemeinsam mit den erfassten Betriebssignalen ausgewertet.

Bei einer weiter verbesserten Verfahrensvariante kann es vorteilhaft sein, wenn mindestens ein Smart-Connector als Messeinrichtung ausgebildet ist und derart im Versorgungsnetz zwischen Netzteil und den mindestens einem Verbraucher angeordnet ist, um das Betriebssignal des Verbrauchers, insbesondere des Feldbusgerätes zu erfassen, insbesondere das Betriebssignal mindestens eines Feldbusgerätes, welches nicht als Messeinrichtung ausgebildet ist.

Anders ausgedrückt, ist mindestens ein Paar aus einem Smart-Connector mit einem Verbraucher gebildet, wobei der Smart-Connector hierbei unmittelbar benachbart zum und vor dem zugehörigen Verbraucher angeordnet ist.

Vorliegend ist unter "vor" oder "nach" die Blickrichtung vom Netzteil in das Versorgungsnetz und insbesondere zu einem einzelnen Verbraucher entlang einer Leitung gemeint, die in der Regel mit der Stromrichtung identisch ist.

Von der Erfindung ist weiterhin ein Versorgungsnetz zum Betrieb einer Behandlungs- und/oder Automatisierungsanlage umfasst, wobei das Versorgungsnetz ausgebildet ist und entsprechende Komponenten, Hardware und Softwarekomponenten umfasst, das Verfahren nach einem der vorherigen Varianten und Ausführungsformen durchzuführen.

Insgesamt ist es vorteilhaft, wenn mindestens ein Teil, insbesondere aber alle erfassten und oder ausgewerteten Daten und/oder Werte in geeigneter Weise direkt oder mittelbar, ggf. nach einer Speicherung, bereitgestellt werden. Diese kann in einer bedarfsweisen Abfrage durch einem Benutzer oder einer automatisierten, sonstigen Verwendung bestehen. Insbesondere kann die Bereitstellung in einer aufbereiteten graphischen oder tabellarischen Form erfolgen, die bedarfsweise Hinweise und Kommentaren zu Besonderheiten und Auffälligkeiten umfassen kann, wie beispielsweise Mehrdeutigkeiten eines Zweigs, eines Abschnitts und/oder eines Verbrauchers.

Das Versorgungsnetz umfasst insbesondere mindestens ein Paar aus einem Smart-Connector und einem Verbraucher, vorrangig eine Mehrzahl aus Paaren aus einem Smart-Connector und einem Verbraucher, wobei die Verbraucher vorteilhafterweise mindestens teilweise als Feldbusgerät ausgebildet sind.

Vorteilhafterweise umfasst das Versorgungsnetz mindestens ein Netzteil, eine Steuereinheit, mindestens ein Feldbusgerät und mindestens eine Messeinrichtung, wobei das Feldbusgerät vom Netzteil als Versorgungsquelle, insbesondere als Spannungs- und/oder Stromquelle, versorgt wird. Weiterhin ist die mindestens eine Messeinrichtung ein Smart-Connector, ein Feldbusgerät und/oder ein im Netzteil integrierter oder hiermit verbundener Betriebswertesensor ist. Das Versorgungsnetz umfasst zudem mindestens einen Verbraucher, der ein Feldbusgerät und/oder ein sonstiges bestromtes Gerät ist.

Alle zu dem Verfahren genannten Aspekte, Vorteile und Optionen sollen identisch oder in analoger Weise für das Versorgungsnetz gelten.

Auch wenn die genaue Lage der Versorgungsnetzkomponenten nicht im Fokus des Verfahrens steht, kann eine ermittelte Topologie um solche Informationen zur Dimension oder Lage verknüpft und angereichert werden, die in der Steuereinheit und/oder einer separaten Auswerteeinheit gemeinsam ausgewertet werden. Dies sind insbesondere Informationen über Bauart und Funktionsweise einzelner Smart-Connectors, Informationen über Verbraucher, wie Feldbusgerät, wie bspw. Standort, Aufgabe, Verwendungszweck, Art der Ansteuerung durch eine Steuerung (SPS/PLC) und/oder die konkrete Kabellänge der versorgenden Leitung zum Netzteil, der benachbarten Messeinrichtung, insb. Smart-Connectors und/oder einem anderen verbundenen Versorgungsnetzteilnehmer.

Weitere Einzelheiten und Vorteile der Erfindung sollen nun anhand eines in den Zeichnungen dargestellten Ausführungsbeispiels näher erläutert werden.

Es zeigen:
- Fig. 1: eine schematische Darstellung eines Versorgungsnetzes,
- Fig. 2: eine schematische Darstellung des Versorgungsnetzes in einem Iterationsschritt bei der Ermittlung der Topologie und
- Fig. 3: eine Auswertungsmatrix für das Versorgungsnetz bei einem ersten Iterationsschritt.

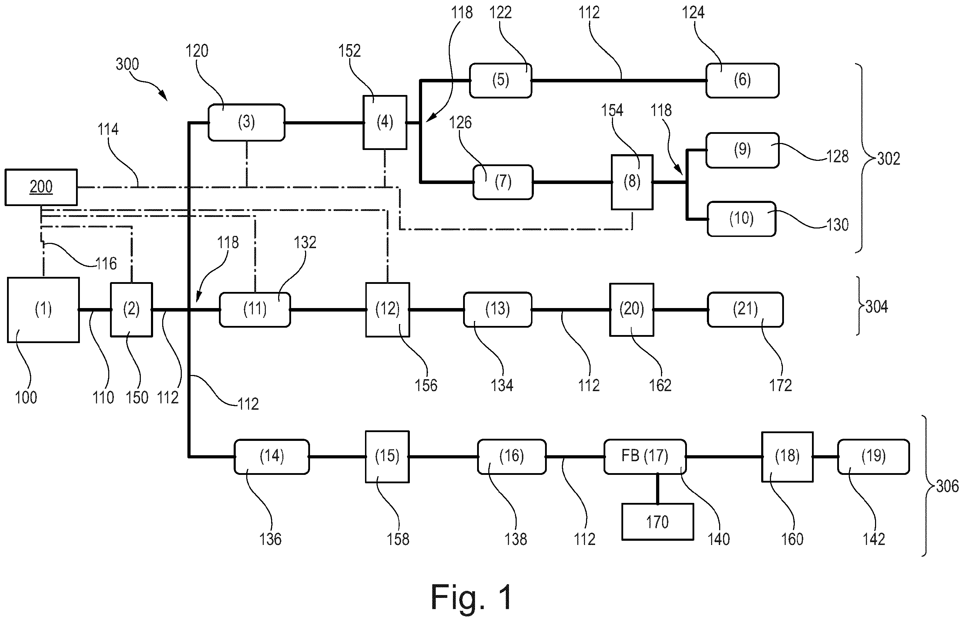

In der Figur 1 ist sehr vereinfacht die Topologie eines Versorgungsnetzwerkes 300 dargestellt. Das Versorgungsnetz 300 umfasst ein Netzteil 100 und insgesamt drei Netzwerkabschnitte 302, 304, 306 die jeweils eine unterschiedliche Anzahl und Art von Netzwerkteilnehmern aufweisen. Diese Netzwerkteilnehmer sind in der Figur 1 mehrere Smart-Connectors, mehrere Feldbusgeräte, ein als drehender Motor ausgebildetes Gerät 170 und ein passiven Verbraucher 172. Die drei Netzwerkabschnitte 302, 304, 306 sind parallel zueinander und sind über einen Leitungsknoten 118 verbunden, der nach dem ersten dem Smart-Connector 150 angeordnet ist. Die Netzwerkteilnehmer eines Netzwerkabschnittes 302, 304, 306 sind über Leitungen 112 mit dem jeweils benachbarten Netzwerkteilnehmer verbunden.

Der erste Leitungsabschnitt weist zwei weitere Leitungsknoten 118 auf. An dem ersten Leitungsknoten 118 wird der erste Netzwerkabschnitt 302 in zwei Unterabschnitte mit zwei oder mehr Netzwerkteilnehmern aufgeteilt und an dem zweiten Leitungsknoten 118 des ersten Netzwerkabschnittes 302 sind zwei Feldbusgeräte 128, 130 parallel angeschossen.

Der zweite Netzwerkabschnitt 304 weist keinen weiteren Leitungsknoten auf und ist über den zentralen Leitungsknoten 118 mit dem ersten Smart-Connector 150 und hierüber mit dem Netzteil 100 verbunden. Endständig des zweiten Netzwerkabschnitts 304 ist ein passiver Verbraucher 172 mit dem davor angeordneten Smart-Connector 162 angeordnet.

Der dritte Netzwerkabschnitt 306 weist ebenfalls mehrere Netzwerkteilnehmer auf, aber keinen Leitungsknoten, wobei exemplarisch dargestellt ist, dass ein als Motor ausgebildetes Gerät 170 mit einem Feldbusgerät 140 in einer Mittelposition in dem dritten Netzwerkabschnitt 306 verbunden ist und von diesem geschaltet und versorgt wird.

Weiterhin umfasst das Versorgungsnetz 300 eine Steuereinheit 200 und/oder ist mit einer solchen mindestens datenleitend verbunden. Die Steuereinheit 200 ist über strichpunktiert dargestellte Datenleitungen 114 mit den zu steuernden Netzteilnehmern verbunden, wobei aus Gründen der Übersichtlichkeit nicht alle Datenleitungen 114 dargestellt wurden. Die Steuereinheit 200 ist zusätzlich über die Datenleitung 116 mit dem Netzteil 116 verbunden. Vorliegend wird vereinfachend über eine Steuerung 200 und Datenleitungen 114, 116 gesprochen, wobei dies nicht einschränkend zu verstehen ist und auch jede Art von Steuer-, Regelungs- und Datenleitungen umfassen soll, auch solche mit einer partiellen Strom- und/oder Spannungsversorgung. Hiermit sind insbesondere jegliche Daten- oder Feldbussysteme und/oder Point-to-Point-Systeme umfasst, die zwei oder mehr Leitungsadern umfassen. Dies sind insbesondere auch die standardisierten Systeme wie CAN-Bus, Profibus, Hart-Bus, IO-Link, SPE, SPE mit PoDL oder auch proprietäre Systeme.

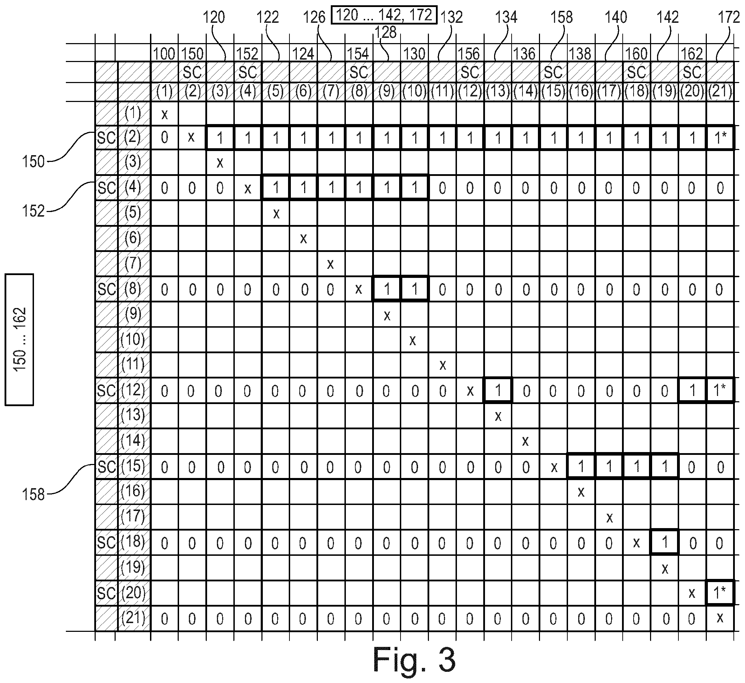

Die in runde Klammern gesetzten Zahlen 1 bis 21 referieren auf die Auswertematrix der Figur 3, und ordnen allen Netzwerkteilnehmern eine jeweils um 1 ansteigende laufende Nummer zu.

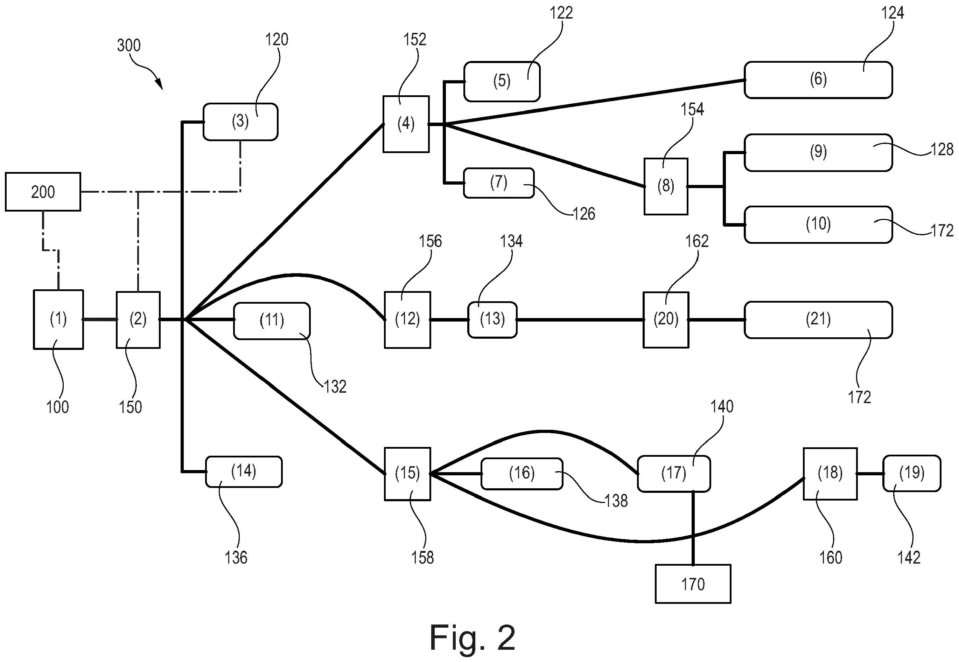

Das in der Figur 2 darstellte Versorgungsnetz 300 zeigt das Versorgungsnetz 300 in dem ersten Iterationsschritt. Dies ist der Moment, wenn vorlaufend von jedem Feldbusgerät 120 ... 142 und/oder dem passiven Verbraucher 172 jeweils ein Betriebssignal gesendet wurde und die zugehörigen Erfassungsdaten von der Steuereinheit 200 empfangen und ausgewertet wurden. Zur Vereinfachung wird dabei vorliegend unterstellt, dass nur die Smart-Connectors 150 ... 162 als Messeinrichtung ausgebildet sind und diese alleinig Betriebssignale empfangen können, und wobei alle Feldbusgeräte 120 ... 142 und der Verbraucher 172 bzw. das Gerät 170 Betriebssignale in das Versorgungsnetz 300 erzeugen können.

Bei der Aufwertung der empfangenen Betriebssignale aus diesem ersten Schritt ergibt sich das Folgende:
Smart-Connector 150 (auch mit (2) bezeichnet) empfängt alle Betriebssignale aus allen drei Netzwerkabschnitten 302, 304, 306 aller Verbraucher.

Der Smart-Connector 152 (auch mit (4) bezeichnet) empfängt von dem ersten Netzwerkabschnitt 302 die Betriebssignale aller Verbraucher bis auf das Feldbusgerät 120 (auch mit (3) bezeichnet).

Analog empfängt der erste Smart-Connector 156 (auch mit (12) bezeichnet) alle Betriebssignal aller Verbraucher des zweiten Netzwerkabschnitts 304, bis auf ein Betriebssignal des vorderen Feldbusgerät 132 (auch mit (11) bezeichnet und der erste Smart-Connector 158 (auch mit (15) bezeichnet) des dritten Netzwerkabschnitts 306 empfängt alle Betriebssignale aller Verbraucher, bis auf ein Betriebssignal des vorderen Feldbusgerätes 136 (auch mit (14) bezeichnet).

In analoger Weise empfangen die sonstigen Smart-Connectors, wie bspw. der hintere Smart-Connector 160 (auch mit (18) bezeichnet), alleinig ein Betriebssignal, das vom Feldbusgerät 142 (auch mit (19) bezeichnet) empfangen werden kann.

In der Figur 3 ist eine Rekonstruktionsmatrix gezeigt, wie sie sich nach der oben genannten Veranlassung von jeweils einem Betriebssignal von jedem Verbraucher, insbesondere den Feldbusgeräten 120 ... 142 ergeben hat, wobei das Gerät 170 nicht gesondert eingetragen wurden und über die Erfassung des Feldbusgerät 140 (auch mit 17) bezeichnet) erfolgt.

In den beiden ersten Zeilen sind die ein Betriebssignal erzeugenden Verbraucher aufgelistet und in den beiden ersten Spalten sind die ein Betriebssignal empfangenden Smart-Connectors aufgelistet. Es gelten dieselben Zahlenwerte und Bezugszeichen wie vorstehend ausgeführt.

Somit erfasst der mit (2) bezeichnete Smart-Connector 150 der zweiten Zeile, alle Betriebssignale der Netzwerkteilnehmer (3) bis (21), das mit (4) bezeichnete Smart-Connector 152 erfasst die Betriebssignale der Netzwerkteilnehmer (5) bis (10) und der mit (15) bezeichnete Smart-Connector 158 erfasst alle Netzwerkteilnehmer 16 bis 19.

In diesem ersten Iterationsschritt kann bspw. nicht unterschieden werden, ob die beiden Feldbusgerät 122 (5), 124 (6) mit dem Smart-Connector 152 (4) in Reihe oder parallel verbunden sind, dasselbe gilt bspw. in analoger Weise für die Verbindung der beiden Feldbusgeräte 138 (16) und 140 (17) mit dem Smart-Connector 158 (15). Ebenso ist in der ersten Iterationsstufe noch nicht erkennbar, wie bzw. ob der Smart-Connector 158 (15) mit dem Feldbusgerät 136 (14) verbunden ist.

Hieraus lässt sich ein erster Algorithmus zur Rekonstruktion wie folgt ableiten, wobei Netzteilnehmer als NT abgekürzt wurden:
- 1.: Kopiere die Messwert-Tabelle gemäß der Figur 3 in eine nächste Rekonstruktionsmatrix
- 1.1: Iteriere in der Matrix über alle NT.
- 1.1.1: Bezeichne den aktuellen NT der Iteration als "A". (Beispiel: A=4)
- 1.1.2: Iteriere über alle NT, die "hinter" NT "A" liegen, d.h. die über eine "1" in der Rekonstruktionsmatrix mit NT "A" verknüpft sind.
- 1.1.2.1: Bezeichne den aktuellen NT der Iteration als "B" (Beispiel: B = 8)
- 1.1.2.2: Iteriere über alle NT, die "hinter" NT "B" liegen, d.h. die über eine "1" in der Rekonstruktionsmatrix mit NT "B" verknüpft sind.
- 1.1.2.2.1: Bezeichne den aktuelle NT der Iteration als "C" (Beispiel: C = 9)
- 1.1.2.2.2: Prüfe, ob in der Rekonstruktionsmatrix "C" mit "A" verbunden ist, d. h. ob NT "C" über eine "1" in der Rekonstruktionsmatrix mit dem NT "A" verknüpft ist.
- 1.1.2.2.2.1: Wenn ja, Lösche die Verbindung zwischen "C" und "A" in der Rekonstruktionsmatrix (Beispiel: Verbindung zwischen 4 und 9 löschen)
- 1.2: Zeichne einen Graphen anhand der Informationen aus der Rekonstruktions-Tabelle.

In dem gezeigten Beispiel können die Feldbusgeräte 134 (13) und das Feldbusgerät 142 (19) als Netzteilnehmer eindeutig erkannt werden, da sie die einzigen Netzteilnehmer hinter jeweils einem Smart-Connector sind.

Mittels einer parallelen Veranlassung von Betriebssignal von zwei Feldbusgeräten und/oder einem Abgrenzungsschritt, wie vorstehend beschrieben, kann eine weitere Rekonstruktion erfolgen, um weitere Details zur Topologie zu ermitteln.

### Bezugszeichenliste

- 100: Netzteil

- 110: Leitung
- 112: Leitung
- 114: Datenleitung
- 116: Datenleitung
- 118: Leitungsknoten

- 120: Feldbusgerät
- 122: Feldbusgerät
- 124: Feldbusgerät
- 126: Feldbusgerät
- 128: Feldbusgerät
- 130: Feldbusgerät
- 132: Feldbusgerät
- 134: Feldbusgerät
- 136: Feldbusgerät
- 138: Feldbusgerät
- 140: Feldbusgerät
- 142: Feldbusgerät

- 150: Smart-Connector
- 152: Smart-Connector
- 154: Smart-Connector
- 154: Smart-Connector
- 156: Smart-Connector
- 158: Smart-Connector

- 160: Smart-Connector
- 162: Smart-Connector

- 170: Gerät
- 172: Verbraucher, passiv

- 200: Steuereinheit

- 300: Netzwerk
- 302: Netzwerkabschnitt
- 304: Netzwerkabschnitt
- 306: Netzwerkabschnitt

## Patentansprüche

1. Verfahren zur Erfassung der elektrischen Topologie eines Versorgungsnetzes (300), umfassend
- mindestens ein Netzteil (100),
- eine Steuereinheit (200),
- mindestens ein Feldbusgerät (120 ... 142) und mindestens eine Messeinrichtung, wobei
- die Feldbusgeräte (120 ... 142) vom Netzteil (100) als Versorgungsquelle versorgt werden, wobei
- die mindestens eine Messeinrichtung ein Smart-Connector (150 ... 162), ein Feldbusgerät (120 ... 142) und/oder ein im Netzteil (100) integrierter oder hiermit verbundener Betriebswertesensor ist
und wobei
- mindestens ein Verbraucher umfasst ist, der ein Feldbusgerät (120 ... 142) und/oder ein sonstiges bestromtes Gerät (170) ist, **dadurch gekennzeichnet, dass** folgende Schritte durchlaufen werden
a) Ansteuerung mindestens eines Verbrauchers zur Erzeugung eines Betriebssignals,
b) Erfassung des Betriebssignals und/oder des zeitlichen Verlaufes des Betriebssignals durch die mind. eine Messeinrichtung,
c) Erfassung des zum Betriebssignal analogen Betriebswertes,
d) Auswertung der Erfassungsdaten aus Betriebssignal und Betriebswert und
e) Anwendung eines Algorithmus' zur Bestimmung der Topologie des Versorgungsnetzes (300).

2. Verfahren nach Anspruch 1, **dadurch gekennzeichnet, dass** im Auswertungsschritt d) unmittelbar und/oder nachlaufend die aus dem Betriebssignal und/oder dem Betriebswert ermittelten Erfassungsdaten, diese Erfassungsdaten strukturiert werden, wie beispielsweise die Hinzufügung einer ID und/oder eines Zeitstempels, und wobei die Erfassungsdaten nach der Strukturierung an die Steuereinheit (200) und/oder eine andere zentrale Auswerte- und/oder Speichereinheit gesendet werden.

3. Verfahren nach Anspruch 1 oder 2, **dadurch gekennzeichnet, dass** im Schritt b) Erfassung des zeitlichen Verlaufes des Betriebssignals durch die mind. eine Messeinrichtung erfolgt, wobei diese in Abhängigkeit von den folgenden Charakteristika der Betriebssignale erfolgt, wenn:
a) als Betriebssignal ein einmaliger, sprunghafter Anstieg des Betriebsparameters vorgenommen wird, insbesondere mit einer kurzen "rise-time" des Stroms und/oder der Spannung und/oder
b) als Betriebssignal eine hochfrequente, periodische Änderung des Stroms und/oder der Spannung vorgenommen wird.

4. Verfahren nach einem der vorherigen Ansprüche, **dadurch gekennzeichnet, dass** nach einer definierten Reihenfolge, Priorisierung und/oder nach einem Zufallsprinzip die Verbraucher, insbesondere alle Verbraucher, des Versorgungsnetzes (300) gem. Schritt a) zur Erzeugung eines Betriebssignals (Betriebssignal) angesteuert werden.

5. Verfahren nach einem der vorherigen Ansprüche, **dadurch gekennzeichnet, dass** im Schritt a) zwei oder mehr Verbraucher derart angesteuert werden, dass diese gleichzeitig ein Betriebssignal ins Versorgungsnetz (300) senden.

6. Verfahren nach einem der vorherigen Ansprüche, **dadurch gekennzeichnet, dass** mindestens zeitweise zu mindestens einem der Schritte a) und/oder b) ein Abgrenzungsschritt erfolgt, indem von mindestens einem Smart-Connector (150 ... 162) und/oder weiteren Verbraucher, insbesondere einem Feldbusgerät (120 ... 142), ein Gegensignal ins Versorgungsnetz (300) gesendet wird, so dass unterscheidbar wird, welche Messeinrichtungen sich vor oder nach dem das Betriebssignal und/oder dem das Gegensignal sendenden Verbraucher befindet.

7. Verfahren nach Anspruch 6, **dadurch gekennzeichnet, dass** im Schritt b) die Erfassung des zeitlichen Verlaufes des Betriebssignals durch die mind. eine Messeinrichtung erfolgt, wobei das Gegensignal in Abhängigkeit von der Charakteristika des Betriebssignals erfolgt und darin besteht, dass mindestens für eine Zeitdauer parallel zum Betriebssignal in mindestens einem weiteren Verbraucher als Gegensignal mindestens eine zusätzliche Induktivität und/oder Kapazität parallel und/oder seriell hinzugeschaltet wird.

8. Verfahren nach einem der vorherigen Ansprüche, **dadurch gekennzeichnet, dass** das im Schritt a) von mindestens einem Verbraucher ins Versorgungsnetz (300) gesendete Betriebssignal Folgendes ist:
- ein für eine Zeitdauer definierter, längerer Stromfluss durch eine Leerleistung,
- ein für eine Zeitdauer definierter, längerer Stromfluss durch eine Betriebsleistung,
- eine Modulation der Stromaufnahme eines Verbrauchers nach einem definierten Gradienten und/oder Takt.

9. Verfahren nach einem der vorherigen Ansprüche, **dadurch gekennzeichnet, dass** zwischen den Schritten a) bis c) in mindestens dem Abschnitt oder dem Zweig des Versorgungsnetzes (300), in welchem der mindestens eine das Betriebssignal sendende Verbraucher und/oder die das Betriebssignal erfassende Messeinrichtung eingebunden sind
- keine Änderung der sonstigen Stromaufnahme erfolgt oder
- der Betrag der Änderung der sonstigen Stromaufnahme hinsichtlich Betrag und/oder Frequenz wesentlich kleiner oder größer ist, als der Betrag und/oder Frequenz des Betriebssignals.

10. Verfahren nach einem der vorherigen Ansprüche, **dadurch gekennzeichnet, dass** zwischen den Schritten a) bis c) in mindestens dem Abschnitt oder dem Zweig des Versorgungsnetzes (300), in welchem der mindestens eine das Betriebssignal sendende Verbraucher und/oder die das Betriebssignal erfassende Messeinrichtung eingebunden sind eine für das Betriebssignal relevante Änderung der sonstigen Stromaufnahme erfolgt, wobei für denselben Verbraucher eine vielfache Wiederholung der Schritte a) bis c) erfolgt und über statistische Verfahren die relevanten Änderung der sonstigen Stromaufnahmen identifizierbar und filterbar sind.

11. Verfahren nach einem der vorherigen Ansprüche, **dadurch gekennzeichnet, dass** in den Schritten d) der Auswertung der Erfassungsdaten und/oder e) der Anwendung eines Algorithmus' zur Bestimmung der Topologie des Versorgungsnetzes (300), neben den Erfassungsdaten durch die Steuereinheit (200) Sekundärdaten ausgewertet werden, wobei die Sekundärdaten beispielsweise mindestens eine der folgenden Daten betreffen:
- Informationen zur Topologie von mindestens einem Zweig oder einem Abschnitt des Versorgungsnetzes,
- Information zu mindestens einem Verbraucher, insbesondere mindestens einem nicht oder mehrdeutig identifizierten Zweig oder Abschnitt des Versorgungsnetzes und/oder einem nicht oder mehrdeutig identifizierten Verbraucher.

12. Verfahren nach einem der vorherigen Ansprüche, **dadurch gekennzeichnet, dass** mindestens ein Smart-Connector (150 ... 162) als Messeinrichtung ausgebildet ist und derart im Versorgungsnetz zwischen Netzteil 100 und den mindestens einem Verbraucher angeordnet ist, um das Betriebssignal des Verbrauchers, insbesondere des Feldbusgerätes (120 ... 142) zu erfassen, insbesondere das Betriebssignal mindestens eines Feldbusgerätes (120 ... 142), welches nicht als Messeinrichtung ausgebildet ist.

13. Verfahren nach einem der vorherigen Ansprüche, **dadurch gekennzeichnet, dass** der Schritt c), Erfassung des zum Betriebssignal analogen Betriebswertes, zeitlich gemäß einer der drei nachstehenden Alternativen erfolgt:
- vor den Schritten a) und/oder b),
- nach dem Schritt b) oder
- vor einem der Schritte a) oder b) und nach dem Schritt b),
wobei der Schritt c) gemäß mindestens einer der drei Alternativen oder unterschiedlicher der drei Alternativen mehrfach erfolgen kann.

14. Versorgungsnetz (300) zum Betrieb einer Behandlungs- und/oder Automatisierungsanlage, **dadurch gekennzeichnet, dass** das Versorgungsnetz (300) ausgebildet ist und entsprechende Komponenten, Hardware und Softwarekomponenten umfasst, das Verfahren nach einem der vorherigen Ansprüche durchzuführen.
